(19) Europäisches Patentamt — European Patent Office — Office européen des brevets

(11) **EP 1 600 764 B1**

(12) **EUROPÄISCHE PATENTSCHRIFT**

(45) Veröffentlichungstag und Bekanntmachung des Hinweises auf die Patenterteilung:
**22.12.2010 Patentblatt 2010/51**

(51) Int Cl.:
***G01N 21/90*** *(2006.01)*

(21) Anmeldenummer: **05011298.6**

(22) Anmeldetag: **25.05.2005**

(54) **Verfahren und Vorrichtung zum Untersuchen lichtdurchlässiger Objekte**

Method and device for inspecting transparent objects

Procédé et dispositif d'inspection d'objets transparents

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **27.05.2004 DE 102004025948**

(43) Veröffentlichungstag der Anmeldung:
**30.11.2005 Patentblatt 2005/48**

(73) Patentinhaber: **Krieg, Gunther, Prof.Dr.Ing.**
**76227 Karlsruhe (DE)**

(72) Erfinder:
• **Krieg, Gunther Prof. Dr.**
**76227 Karlsruhe (DE)**

• **Engelhaupt, Bernd**
**54568 Gerolstein (DE)**
• **Koukolitschek, Karl**
**76189 Karlsruhe (DE)**
• **Kaweh, Amoi-Taleghani**
**76448 Durmersheim (DE)**
• **Maier, Wilfried**
**75056 Sulzfeld (DE)**
• **Fey, Dirk**
**67630 Neewiller (FR)**

(56) Entgegenhaltungen:
**EP-A- 0 491 555     US-B1- 6 239 870**
**US-B1- 6 424 414**

**EP 1 600 764 B1**

**Beschreibung**

Die Erfindung betrifft ein Verfahren zum Untersuchen von im wesentlichen lichtdurchlässigen Objekten, insbesondere Getränkeflaschen aus Glas oder Kunststoff, auf Gebrauchsspuren, wie Kratzer oder dergleichen, wobei die Objekte jeweils einer Lichteinstrahlung ausgesetzt und mittels wenigstens einer Beobachtungseinrichtung beobachtet werden. Weiterhin betrifft die Erfindung eine zur Durchführung des vorstehend genannten Verfahren geeignete Vorrichtung mit mindestens einer Lichtquelle zum Einstrahlen von Licht auf ein zu prüfendes Objekt und mindestens einer Beobachtungseinrichtung zum Beobachten des zu prüfenden Objekts, die zumindest zum Aufnehmen und Auswerten eines Bildes des Objekts ausgebildet ist.

Die Nahrungsmittelindustrie und speziell die Getränkeindustrie verwendet heute in großem Umfang Mehrwegverpackungen, insbesondere Flaschen, aus Glas oder Kunststoff (PET) zum Abfüllen ihrer Erzeugnisse. Derartige Mehrwegverpackungen werden vom Endverbraucher nach Entnahme des Produkts idealerweise zurückgegeben, gereinigt, erneut befüllt und anschließend wieder dem Handel zugeführt.

Allerdings ist dieser Kreislauf nicht endlos fortsetzbar, da die o.g. Verpackungen im Zuge des Kreislaufs eines Mehrwegsystems einer Vielzahl von Beanspruchungen ausgesetzt sind, die insbesondere ihre Oberflächen angreifen und sogar zu Beschädigungen, wie Absprüngen usw., führen können. Solche Gebrauchsspuren treten je nach Beanspruchung der Verpackungen im Kreislauf nach mehr oder weniger zahlreichen Umläufen an jeder Mehrwegverpackung auf. Sie stellen in der Regel Oberflächenverletzungen im Verpackungsmaterial dar, die beispielsweise an Glas oder Kunststoffflaschen im trockenen Zustand weiß erscheinen. Derartige Gebrauchsspuren an Mehrwegverpackungen, insbesondere -flaschen, werden mit dem Begriff "Scuffing" bezeichnet. Der Begriff stammt vom englischen Verb "to scuff", das mit "Schleifen" oder auch im weitesten Sinne "Verschleißen" übersetzt werden kann. Scuffing entsteht aus der Kombination mechanischer und chemischer Belastungen (beim Reinigen) der Flaschen. Teilweise wird deshalb auch von chemischem und mechanischem Scuffing gesprochen.

Scuffing ist ein Phänomen, das ausschließlich an Mehrwegflaschen auftritt und insbesondere bei Einweglösungen nicht beachtet werden muss. Dabei betrifft Scuffing sowohl Glas-, als auch Kunststoffflaschen. Während bei den meisten Mehrweg-Glasflaschen das Scuffing konstruktionsbedingt durch ausgebildete Wulste auf zwei sogenannte Reibring-Bereiche an der Flaschenschulter und am Flaschenfuß begrenzt ist, haben die meisten Kunststoff-Mehrwegflaschen derartige Bereiche nicht, so dass Scuffing über die komplette Seitenwand der Flasche auftreten kann.

Eine makellos aussehende Verpackung eines Produkts ist aus Marketinggründen unerlässlich. Außerdem ist auch aus Sicherheitsgründen dafür Sorge zu tragen, dass zu stark angegriffene Mehrweg-Verpackungen aus dem Verkehr gezogen und ersetzt werden. Dazu wurde in der Vergangenheit vorgeschlagen, die Verpackungen (ggf. nach der Reinigung) mit Hilfe einer Kamera und einer nachgeschalteten Bildverarbeitung zu untersuchen, wobei die Kamera auf eine Wand der Verpackung fokussiert. Es hat sich allerdings gezeigt, dass mit derartigen Techniken zur "Seitenwandkontrolle" Scuffing nicht sicher feststellbar ist.

Die US 6,239,870 B1 beschreibt ein Verfahren und eine Vorrichtung zum Nachweis diffus streuender Defekte in transparenten Behältern, beispielsweise Getränkeflaschen. Dazu wird der Behälter von einer Lichtquelle durch eine Behälterwand durchstrahlt und ein Bild der Behälterwand aufgenommen, wobei zwischen der Lichtquelle und dem Behälter ein Kontrastmuster mit vorbekanntem Helligkeitsprofil angeordnet ist. Für jeden Bildpunkt werden die Helligkeit und der Kontrast zu den benachbarten Bildpunkten ermittelt. Bei einer Abnahme des Kontrasts unter einen vorgegebenen Schwellwert wird ein Defekt detektiert.

Der Erfindung liegt die Aufgabe zugrunde, ein vorbekanntes Verfahren und eine vorbekannte Vorrichtung der eingangs genannten Art dahingehend weiterzubilden, dass unter Vermeidung der vorstehend aufgeführten Nachteile eine durch Scuffing hervorgerufene optische und funktionelle Beeinträchtigung von Objekten, insbesondere Mehrwegverpackungen aus Glas oder Kunststoff, sicher erkennbar sind.

Diese Aufgabe wird durch ein Verfahren gemäß Anspruch 1 und eine Vorrichtung gemäß Anspruch 15 gelöst.

Wenigstens ein Teil der Lichtstrahlung wird vor deren Eintreffen an der Beobachtungseinrichtung mit einer Referenzgeometrie mit vorbekannten Helligkeitsprofil in Wechselwirkung gebracht. In Wechselwirkung mit der Referenzgeometrie kann das eingestrahlte Licht beispielsweise dadurch treten, dass es die Referenzgeometrie durchsetzt und dabei entsprechend deren geometrischer Ausgestaltung maskiert wird. Alternativ kann das eingestrahlte Licht auch an der Referenzgeometrie rückgestreut werden und auf diese Weise mit Letzterer in Wechselwirkung treten.

Bei der Vorrichtung ist vorgesehen, dass in einem Lichtweg von der Lichtquelle zur Beobachtungseinrichtung eine Referenzgeometrie angeordnet ist, deren Abbild in dem aufgenommenen Bild zum Bestimmen der Gebrauchsspuren auswertbar ist.

Durch die Beobachtungseinrichtung, beispielsweise eine Kamera, wird nicht direkt eine Seitenwand des Objekts, sondern eine bekannte, zusammen mit dem Objekt in dem Lichtweg zwischen Lichtquelle und Beobachtungseinrichtung angeordnete Geometrie beobachtet. Mit anderen Worten: das zu untersuchende, lichtdurchlässige Objekt fungiert als eine zwischen der Beobachtungseinrichtung und der Lichtquelle sowie insbesondere auch der Referenzgeometrie angeordnete "Streuscheibe", deren Auswirkungen auf das Abbild der Referenzgeometrie zur Scuffing-Bestimmung nutzbar sind.

Ein zu untersuchender Bereich des Objekts wird von mit der Referenzgeometrie in Wechselwirkung getretener Lichtstrahlung durchsetzt und weiterhin durch die Beobachtungseinrichtung wenigstens ein Bild der Referenzgeometrie und des zu untersuchenden Bereichs des Objekts aufgenommen und analysiert. Das aufgenommene Bild wird vor einer Analyse bildbearbeitend aufbereitet, um so die durch Scuffing erzeugten Bildinformationen besser extrahieren zu können.

Gemäß eine nicht beanspruchten Möglichkeit werden Helligkeitsgradienten der Lichtstrahlung nach Wechselwirkung einerseits nur mit der Referenzgeometrie und andererseits mit der Referenzgeometrie und dem zu untersuchenden Objekt verglichen, um auf diese Weise die Art und den Umfang der Beschädigungen am Objekt bestimmen zu können. Erfindungsgemäß wird das aufgenommene Bild vor der Analyse in ein Helligkeitsgradienten-Bild umgewandelt, was mit einem Standardalgorithmus der Bildbearbeitung, wie dem Sobel-Algorithmus, geschehen kann. Anschließend wird mindestens eine dem Bild zugeordnete Kenngröße bestimmt, wobei es sich bei dieser Kenngröße um eine Standardabweichung des Helligkeitsgradienten-Bilds handelt.

Um eine akzeptable Bildbearbeitungszeit und damit eine entsprechende Bestimmungszeit einzuhalten, sieht eine Weiterbildung des erfindungsgemäßen Verfahrens vor, dass zur Gesamtbestimmung der Gebrauchsspuren eines Objekts jeweils eine Mehrzahl von Ausschnitten des aufgenommenen Bildes analysiert und die Analyseergebnisse kombiniert werden, beispielsweise indem ein Mittelwert der Analyseergebnisse für jeden Bildausschnitt bestimmt wird. Zur ebenso einfachen wie flexiblen Entscheidung, ob ein derart untersuchtes Objekt in dem Mehrwert-Kreislauf verbleiben kann oder aussortiert werden muss, kann erfindungsgemäß weiterhin vorgesehen sein, dass die ermittelten Kenngrößen einzeln oder kombiniert mit einem vorgegebenen Entscheidungs-Richtwert verglichen werden. Dieser lässt sich insbesondere aus einem aufgenommenen Bild der Referenzgeometrie allein, d.h. ohne Anwesenheit eines zu untersuchenden Objekts im Lichtweg ableiten.

Zur Lichteinstrahlung auf das jeweils zu untersuchende Objekt kann alternativ vorgesehen sein, dass das Objekt einer Auflicht-Einstrahlung ausgesetzt wird oder dass das Objekt einer Durchsicht-Einstrahlung ausgesetzt wird. Insbesondere in ersterem Fall wird die Strahlung vorteilhafter Weise an der Referenzgeometrie rückgestreut; im Zuge der zweitgenannten Ausgestaltung wird dagegen die Referenzgeometrie vorzugsweise durchstrahlt. Alternative Weiterbildungen des erfindungsgemäßen Verfahrens sehen darüber hinaus vor, dass die Strahlung zunächst mit der Referenzgeometrie wechselwirkt und anschließend mit dem zu untersuchenden Objekt oder dass die Strahlung zunächst mit dem zu untersuchenden Objekt und anschließend mit der Referenzgeometrie wechselwirkt, so dass sich anwendungsspezifisch bestmögliche Bestimmungsergebnisse erzielen lassen.

Um eine höhere Sicherheit bei der erfindungsgemäßen Untersuchung von Objekten zu erzielen, sieht eine bevorzugte Weiterbildung des erfindungsgemäßen Verfahrens vor, dass die Objekte jeweils mittels zwei Beobachtungseinrichtungen beobachtet werden, deren Beobachtungsrichtungen miteinander einen im wesentlichen rechten Winkel einschließen. In jedem Fall kann die Lichteinstrahlung auf das jeweils zu untersuchende Objekt blitzartig oder alternativ kontinuierlich erfolgen.

Insbesondere bei Verwendung einer Durchlicht-Einstrahlung zur Untersuchung der Objekte kann erfindungsgemäß vorgesehen sein, dass für eine Referenzgeometrie eine im wesentlichen ebene Gitterstruktur verwendet wird, die demgemäss ebenfalls größtenteils lichtdurchlässig ist, wobei es sich vorzugsweise um eine quadratische Gitterstruktur handelt, d.h. eine Gitterstruktur mit quadratischen Gitterdurchbrüchen. Bei Verwendung einer Auflicht-Einstrahlung kommt vorzugsweise als Referenzgeometrie ein ebenes Muster, wie ein Schachbrett-Muster zum Einsatz. Allerdings ist auch im Durchlicht-Verfahren der Einsatz einer maskenartigen Referenzgeometrie in Form eines Schachbrett-Musters möglich.

Für das Wesen der Erfindung entscheidend ist dabei nach dem Vorstehenden, dass die Referenzgeometrie nach einer bevorzugten Weiterbildung der erfindungsgemäßen Vorrichtung ein vorbekanntes Helligkeitsprofil besitzt, wobei die Referenzgeometrie als Gitterstruktur aus einem farblich gegenüber einem Hintergrund kontrastierten Material ausgebildet sein kann, z.B. als dunkles Gitter vor einem hellen Hintergrund. Im Hinblick auf eine möglichst einfache Auswertung des Abbilds der Referenzgeometrie in dem aufgenommenen Bild des Objekts zum Bestimmen von Gebrauchsspuren sieht eine besonders vorteilhafte Weiterbildung der erfindungsgemäßen Vorrichtung vor, dass die Referenzgeometrie als Quadratgitter-Struktur ausgebildet ist. Alternativ kann jedoch, wie bereits erwähnt, auch ein Schachbrettmuster als Referenzgeometrie Verwendung finden.

Die Referenzgeometrie kann erfindungsgemäß von zumindest einer Beobachtungseinrichtung aus gesehen hinter dem Objekt angeordnet sein. Alternativ oder zusätzlich ist jedoch vorgesehen, dass die Referenzgeometrie von zumindest einer Beobachtungseinrichtung aus gesehen vor dem Objekt angeordnet ist.

Erfindungsgemäß weist die Beobachtungseinrichtung eine Bildverarbeitungseinrichtung zum Bestimmen mindestens eines Helligkeitsgradienten-Bilds aus dem aufgenommenen Bild auf. Darüberhinaus weist die Beobachtungseinrichtung eine Bestimmungseinrichtung zum Bestimmen einer Kenngröße des Helligkeitsgradienten-Bilds auf, bei der es sich um eine Standardabweichung des Helligkeitsgradienten-Bilds handelt.

Um eine Entscheidung darüber treffen zu können, ob ein erfindungsgemäß untersuchter Artikel in dem Mehrweg-Kreislauf verbleiben oder aussortiert werden soll, zeichnet sich eine bevorzugte Ausführungsform der Vorrichtung weiterhin dadurch aus, dass sie eine Vergleichseinrichtung zum Vergleichen der Kenngröße(n) mit wenigstens einem vorgegebenen Entscheidungs-Richtwert enthält.

Zur Erhöhung der Bestimmungsgenauigkeit insbesondere bei Objekten, die spezielle, isolierte geometrische Merkmale aufweisen, wie Reliefs oder dgl., kann die Vorrichtung bevorzugt wenigstens zwei unter einem endlichen Winkel zueinander angeordnete Beobachtungseinrichtungen aufweisen, wobei der zwischen den Beobachtungsrichtungen der Beobachtungseinrichtungen eingeschlossene Winkel einerseits veränderbar sein kann, vorzugsweise jedoch ein rechter Winkel ist. Auf diese Weise lässt sich zur Scuffing-Bestimmung vorteilhafter Weise das Bild einer Beobachtungseinrichtung verwenden, das die o.g. speziellen Bereiche vermeidet, um das Untersuchungsergebnis nicht zu verfälschen.

Wenn zur erfindungsgemäßen Bestimmung der Gebrauchsspuren ein Durchlicht-Verfahren eingesetzt werden soll, sieht eine entsprechende Ausgestaltung der erfindungsgemäßen Vorrichtung vor, dass die Lichtquelle von der Beobachtungseinrichtung aus gesehen im wesentlichen hinter der Anordnung aus Objekt und Referenzgeometrie angeordnet ist. Alternativ kann zur Realisierung eines Auflicht-Verfahrens vorgesehen sein, dass die Lichtquelle unter einem Winkel zwischen 0° und 180°, vorzugsweise zwischen 45° und 135°, bezogen auf die Beobachtungsrichtung der Beobachtungseinrichtung angeordnet ist.

Um mit der erfindungsgemäßen Vorrichtung einen optimalen Durchsatz an zu untersuchenden Objekten zu erreichen, zeichnet sich diese in Weiterbildung durch ein Fördermittel aus, durch das die zu untersuchenden Objekte an der Beobachtungseinrichtung vorbei bewegbar sind.

Die Lichtquelle der erfindungsgemäßen Vorrichtung ist nach einer äußerst bevorzugten Ausgestaltung als Anordnung von Leuchtdioden (LED) ausgebildet, die vorzugsweise matrixförmig angeordnet sind. Die Lichtquelle kann weiterhin alternativ als Blitzlicht oder als kontinuierlich strahlende Lichtquelle ausgebildet sein, wobei je nach Anwendungszweck die eine oder die andere Ausgestaltung aus energetischen und/oder bestimmungstechnischen Gründen ihre Vorzüge haben kann. Vorzugsweise ist die Lichtquelle zum Ausstrahlen von Licht im infraroten Spektralbereich (IR) ausgebildet. Alternativ kann die Lichtquelle im Rahmen der vorliegenden Erfindung zum Ausstrahlen von sichtbarem Licht ausgebildet, was eine besonders einfache und kostengünstige Bildaufnahme und Auswertung mit herkömmlicher Kamera- und Bildverarbeitungstechnik ermöglicht. Bei Verwendung der o.g. IR-LED-Anordnung liegt die Wellenlänge der ausgesandten Strahlung zwecks Störlichtunterdrückung vorzugsweise zwischen 650 nm und 1050 nm.

Optimale Bestimmungsergebnisse bei gleichzeitig relativ einfacher und damit kostengünstiger Ausgestaltung der erfindungsgemäßen Vorrichtung lassen sich speziell dann erzielen, wenn die erfindungsgemäße Vorrichtung gemäß einer äußerst bevorzugten Ausgestaltung zwei Beobachtungsanordnungen mit je einer Beobachtungseinrichtung und je einer Lichtquelle aufweisen, wobei die Beobachtungsrichtungen der Beobachtungsanordnungen im wesentlichen orthogonal zueinander ausgerichtet sind.

Weitere Eigenschaften und Vorteile der Erfindung ergeben sich aus der Beschreibung von Ausführungsbeispielen anhand der Zeichnung. Es zeigt:

Fig. 1    in einer schematisch-perspektivischen Ansicht den grundsätzliche optischen Aufbau einer erfindungsgemäßen Vorrichtung;

Fig. 2    eine Draufsicht auf eine spezielle Ausgestaltung der erfindungsgemäßen Vorrichtung;

Fig. 3    ein Blockschaltbild der erfindungsgemäßen Vor- richtung;

Fig. 4a    ein durch die erfindungsgemäße Vorrichtung aufge- nommenes Bild einer auszusortierenden Mehrwegflasche;

Fig. 4b    die Bilddaten aus Fig. 4a nach Bestimmen eines Helligkeitsgradienten-Bilds einer auszusortieren- den Mehrwegflasche;

Fig. 5a,b    weitere Bilddaten bzw. ein zugehöriges Hellig- keitsgradienten-Bild der auszusortierenden Mehr- wegflasche gemäß Fig. 4a,b; und

Fig. 6a,b    Bilddaten bzw. zugehöriges Helligkeitsgradienten- Bild einer weiter verwendbaren Mehrwegflasche.

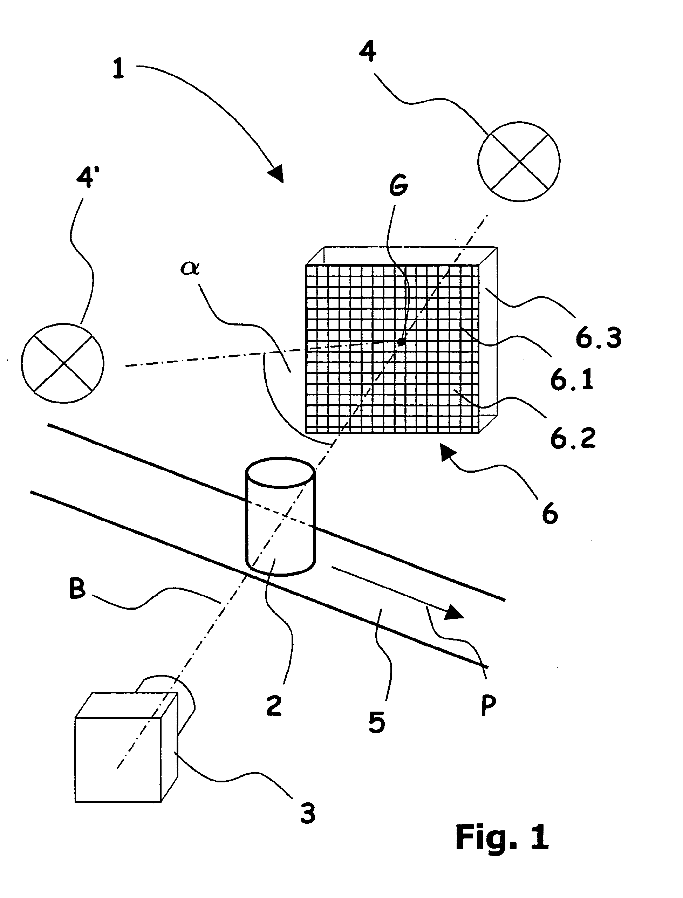

Die Figur 1 zeigt in einer schematisch-perspektivischen Ansicht den grundlegenden optischen Aufbau einer erfindungsgemäßen Vorrichtung 1 zum Untersuchen von lichtdurchlässigen Objekten 2 auf Gebrauchsspuren. Das zu untersuchende Objekt 2 ist in der Figur 1 nur schematisch dargestellt; gemäß einem bevorzugten Einsatzzweck der vorliegenden Erfindung kann es sich dabei insbesondere um eine Mehrweg-Getränkeflasche aus Kunststoff, wie PET oder dergleichen, handeln.

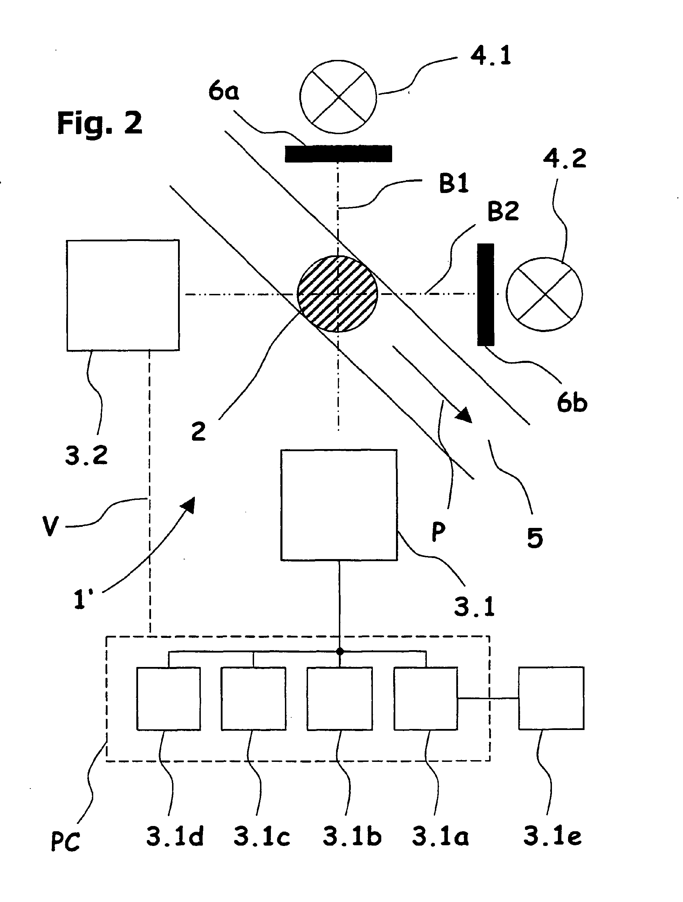

Zum Untersuchen des Objekts 2 ist zunächst eine Beobachtungseinrichtung 3 in Form einer Kamera vorgesehen, mit bzw. in der noch weitere Funktionseinheiten verbunden oder enthalten sein können, wie weiter unten anhand der Fig. 2 detailliert dargestellt ist.

Ausgehend von der Beobachtungseinrichtung 3 ist in Verlängerung deren Beobachtungsrichtung B über das Objekt 2 hinaus eine Lichtquelle 4 vorgesehen, bei der es sich um ein Blitzlicht oder alternativ um eine kontinuierlich Licht ausstrahlende Quelle handeln kann.

Für die zu untersuchenden Objekte 2 beinhaltet die erfindungsgemäße Vorrichtung 1 vorzugsweise ein geeignetes Fördermittel 5, wie ein Förderband, das gemäß der Darstellung in Fig. 1 in Richtung des Pfeils P beweglich ist und durch das die zu untersuchenden Objekte 2 kontinuierlich derart in die Vorrichtung 1 hineinbewegt werden können, dass sie - wie dargestellt - zumindest zeitweise in der Beobachtungsrichtung B der Beobachtungseinrichtung 3 platziert sind.

Von der Beobachtungseinrichtung 3 aus gesehen hinter einem zu untersuchenden Objekt 2, jedoch vor der Lichtquelle 4, ist erfindungsgemäß eine Referenzgeometrie 6 mit bekanntem Helligkeitsprofil in Form eines quadratischen Gitters 6 angeordnet, hier exemplarisch als körperliches Gitter aus Metall oder einem anderen geeigneten Material, wie Kunststoff, dargestellt. Dabei bezieht sich das Kennzeichen "quadratisch" hier und im Folgenden auf die Form der zwischen den Gitterstäben 6.1 jeweils verbleibenden Durchbrüche 6.2. Gemäß einer ersten, in der Fig. 1 dargestellten Ausgestaltung der Erfindung ist die Referenzgeometrie/das Gitter 6 für das von der Lichtquelle 4 ausgestrahlte Licht durchlässig, so dass die Beobachtungseinrichtung 3 gemäß der in Fig. 1 dargestellten Anordnung von Lichtquelle 4, Gitter 6, Objekt 2 und Beobachtungseinrichtung 3 ein kombiniertes Bild zumindest eines Teilbereichs des Gitters 6 und eines Teilbereichs des Objekts 2 aufnimmt, wobei die Abbildungen des Gitters 6 und des Objekts 2 auf dem aufgenommenen Bild der Beobachtungseinrichtung 3 überlagert sind.

Die Lichtquelle 4, die vorzugsweise als eine dem Fachmann als solche bekannte, matrixförmig-flächige Anordnung von (Infrarot-)Leuchtdioden (IR-LED) ausgebildet ist, kann abweichend von der gezeigten Darstellung auch in direkter baulich-körperlicher Verbindung mit der Referenzgeometrie 6 stehen, d.h. das Gitter 6 ist dann direkt auf der (flächigen) Lichtquelle angeordnet, die sich z.B. an der Stelle des Hintergrunds 6.3 (s.u.) befindet.

Nach einer alternativen Ausgestaltung der Vorrichtung 1, die in der Fig. 1 ebenfalls dargestellt ist, kann an Stelle der Lichtquelle 4, die in Verbindung mit der gezeigten Anordnung von Objekt 2 und Beobachtungseinrichtung 3 im Durchlicht-Verfahren arbeitet, eine Lichtquelle 4' vorgesehen sein, die ausgehend von einem gedachten Punkt G auf dem Gitter 6 unter einen Winkel $\alpha$ zur Beobachtungsrichtung B der Beobachtungseinrichtung 3 angeordnet ist. Im Gegensatz zu der o.g. Lichtquelle 4 arbeitet die Lichtquelle 4' bezogen auf die Anordnung von Objekt 2 und Beobachtungseinrichtung 3 nicht im Durchlicht- sondern im Auflicht-Verfahren. Entsprechend kann das in der Fig. 1 gezeigte Gitter 6 einen nach Art einer Mattscheibe einen reflektierenden Hintergrund 6.3 aufweisen. Alternativ ist statt der Verwendung des beschriebenen Gitters 6 die Verwendung eines flächigen Musters als Referenzgeometrie möglich, beispielsweise ebenfalls in Form eines Gitters oder alternativ in Form eines Schachbrett-Musters (nicht gezeigt). Der entscheidende Aspekt bei der Verwendung des Gitters 6 bzw. des (nicht gezeigten) flächigen Musters besteht darin, dass dieses - wie gesagt - ein vorbekanntes, möglichst kontrastreiches Helligkeitsprofil besitzt, das bei Lichteinstrahlung durch die Lichtquelle 4, 4' mit einem (Durchstrahlungs-)Bild des Objekts 2 überlagert und durch die Beobachtungseinrichtung 3 aufgenommen wird. Das flächige Muster kann als gedrucktes Muster ausgebildet sein, wobei als Träger jedes geeignete Material in Frage kommt, beispielsweise Karton, Kunststoff oder Metall.

Die Fig. 2 zeigt in einer schematischen Draufsicht eine im wesentlichen der Vorrichtung 1 aus Fig. 1 entsprechende erfindungsgemäße Vorrichtung 1' zum Untersuchen von lichtdurchlässigen Objekten 2. Abweichend von der Vorrichtung 1 gemäß der Fig. 1 weist die Vorrichtung 1' gemäß der Fig. 2 zwei vollständige, separate Anordnungen aus Beobachtungseinrichtung 3.1, 3.2, Lichtquelle 4.1, 4.2 und Referenzgeometrie 6a, 6b auf, wobei Letztere gemäß der Fig. 2 als im wesentlichen lichtdurchlässige Gitterstrukturen ausgebildet sind.

Mit der in der Fig. 2 gezeigten Vorrichtung 1' ist es möglich, das Objekt 2 gleichzeitig aus zwei Richtungen unter einem relativen Winkel von im wesentlichen 90° zu untersuchen, wobei einem durch die Beobachtungseinrichtung 3.1, 3.2 aufgenommenen Bild jeweils ein Abbild der entsprechenden Referenzgeometrie 6a, 6b überlagert wird. Dies ist besonders wichtig bei Objekten mit Strukturen, die mit endlicher Zähligkeit über den Umfang angeordnet sind, oder bei lediglich über einen Teilumfang angeordneten Strukturen. So gibt es Flaschen, die über den Umfang zwischen teilzylindrischen oder teilkonischen Bereichen Wülste oder Kerben aufweisen; dann können die beiden Untersuchungsanordnungen so zueinander angeordnet sein, dass zumindest eine davon einen am meisten dem Verschleiß ausgesetzten Bereich des Objekts erfasst, wie eine Wulst bei einem Objekt mit Wülsten oder einen teilzylindrischen oder teilkonischen Bereich bei einem Objekt mit Erhebungen. Entsprechendes gilt für ein Objekt, das über einen Teilbereich mit einer Struktur, wie "Tropfen", versehen ist. Auf diese Weise wird sichergestellt, dass eine Untersuchungsanordnung den verbleibenden, glatten Bereich des Objekts erfasst, ohne dass jeweils die Objekte in aufwändiger Weise ausgerichtet werden müssen.

Weiterhin ist in der Fig. 2 exemplarisch anhand der Beobachtungseinrichtung 3.1 eine erfindungsgemäße Ausstattung der Vorrichtungen 1, 1' gezeigt. Demgemäss stehen die Beobachtungseinrichtungen 3.1, 3.2 weiterhin in Wirkverbindung mit einer Bildverarbeitungs-Einrichtung 3.1a zum Verarbeiten der mit Hilfe der Beobachtungseinrichtungen 3.1, 3.2 aufgenommenen Bilder, einer Bestimmungseinrichtung 3.1b zum Bestimmen gewisser Eigenschaften der durch die Bildverarbeitungs-Einrichtung 3.1a verarbeiteten Bilder (siehe hierzu detailliert weiter unten), einer Vergleichseinrichtung 3.1c zum Vergleichen der ermittelten Bildeigenschaften mit vorgegebenen Richtwerten, wobei insbesondere für Letztere weiterhin geeignete Speichermittel 3.1d, wie ein Massenspeicher, vorgesehen sind, die auch zum Ablegen von Bilddaten verwendbar sein können. Die vorstehend aufgeführten Funktionseinheiten 3.1a-d in Wirkverbindung mit der Beobachtungseinrichtung 3.1 können in einer gemeinsamen baulichen Einheit, beispielsweise in Form eines PC, zusammengefasst und demgemäss als Prozessormittel, Festplattenspeicher und/oder geeignete PC-Karten ausgebildet sein. Über die genannte bauliche Einheit PC sind die Funktionseinheiten 3.1a-d weiterhin vorzugsweise mit Eingabe-/Ausgabemitteln 3.1e verbunden, über die eine Bedienperson gezielt Einfluss auf deren Funktion nehmen kann, beispielsweise durch Vorgabe eines neuen Vergleichs-Richtwertes (siehe oben). Bei den Eingabe-/Ausgabemitteln 3.1e kann es sich beispielsweise um eine Tastatur, eine Maus oder dergleichen sowie einen Bildschirm handeln.

Wie in der Fig. 2 anhand der gestrichelten Verbindungslinie V gezeigt, kann die weitere Beobachtungseinrichtung 3.2 vorzugsweise gemeinsam mit der Beobachtungseinrichtung 3.1 an eine gemeinsame bauliche Einheit PC angeschlossen sein.

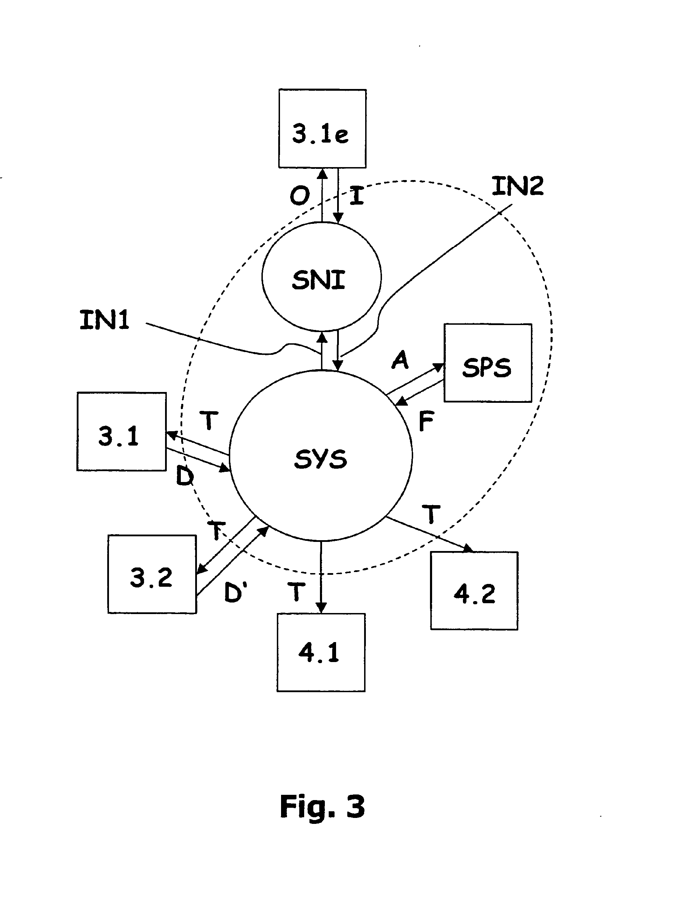

Die Fig. 3 zeigt anhand eines Blockschaltbilds ein Konzept zum Steuern insbesondere der in der Fig. 2 dargestellten erfindungsgemäßen Vorrichtung 1'. Es sei hier vorausgeschickt, dass die in dem gestrichelt markierten Bereich enthaltenen Blöcke SYS, SPS, SNI vorzugsweise als entsprechende softwaretechnische Einrichtungen der in der Fig. 2 gezeigten Einheit PC ausgebildet sind.

Mit den Bezugszeichen SYS ist in der Fig. 3 eine übergeordnete Systemsteuerung für die erfindungsgemäße Vorrichtung 1, 1' und ein mit ihrer Hilfe durchführbares Untersuchungsverfahren (hierzu genauer weiter unten) bezeichnet. Die Systemsteuerung SYS steht in Wirkverbindung mit einer weiteren Steuereinheit SPS, vorzugsweise einer speicherprogrammierbaren Steuerung, für das in den Fig. 1 und 2 gezeigte Fördermittel 5 der Vorrichtung 1, 1', an die Informationen betreffend eine Ausleitung A von Objekten 2 übertragen und von der Informationen bezüglich eines Takts F des Fördermittels 5 empfangen werden, was in der Fig. 3 durch die entsprechenden Pfeile zwischen den einzelnen Blöcken dargestellt ist. Weiterhin steht die Systemsteuerung SYS in Wirkverbindung mit einer weiteren Einrichtung SNI, die als Zwischenglied zwischen der Systemsteuerung SYS und dem bereits in der Fig. 2 gezeigten Eingabe-/Ausgabemitteln 3.1e fungiert. Von Letzteren empfängt sie Benutzereingaben I und liefert an diese Ausgabedaten O, so dass einer Bedienperson ein (momentaner) Zustand der erfindungsgemäßen Vorrichtung 1, 1' anzeigbar ist, auf den diese durch entsprechende Eingaben gezielt Einfluss nehmen kann. Mit der Systemsteuerung SYS tauscht das Zwischenglied SNI Informationen IN1, IN2 betreffend die zu untersuchenden Objekte 2 (vgl. Fig. 1, 2) aus, wie Abmessungsdaten, Materialdaten, Vergleichswerte oder dergleichen.

Weiterhin in Wirkverbindung mit einer Systemsteuerung SYS stehen die bereits anhand der vorangehenden Fig. 1 und 2 behandelten Beobachtungseinrichtungen 3.1, 3.2 sowie die Lichtquellen 4.1, 4.2. Die Beobachtungseinrichtungen 3.1, 3.2 und die Lichtquellen 4.1, 4.2 empfangen von der Systemsteuerung SYS geeignete Trigger-Signale T, durch die in Abstimmung mit von der Steuereinheit SPS gelieferten Takt-Informationen F eine Lichteinstrahlung auf ein zu untersuchendes Objekt 2 aktiviert und sogleich mit einer Bildaufnahme begonnen wird. Vorzugsweise steht jede Lichtquelle 4.1, 4.2 in Wirkverbindung mit einer Lichtschranke (nicht gezeigt), die bei Anwesenheit eines Objekts 2 das o.g. Trigger-Signal T auslöst. Die aufgenommenen Bilddaten D, D' liefern die Beobachtungseinrichtungen 3.1, 3.2 zur Weiterverarbeitung und/oder zum Anzeigen mittels der Eingabe-/Ausgabemittel 3.1e zurück an die Systemsteuerung SYS zur Weiterverarbeitung, wie nachfolgend detailliert beschrieben.

Im Folgenden wird eine besonders bevorzugte Ausgestaltung der o.g. Weiterverarbeitung von Bilddaten detailliert beschrieben, die im Rahmen der Erfindung zum Einsatz kommt:

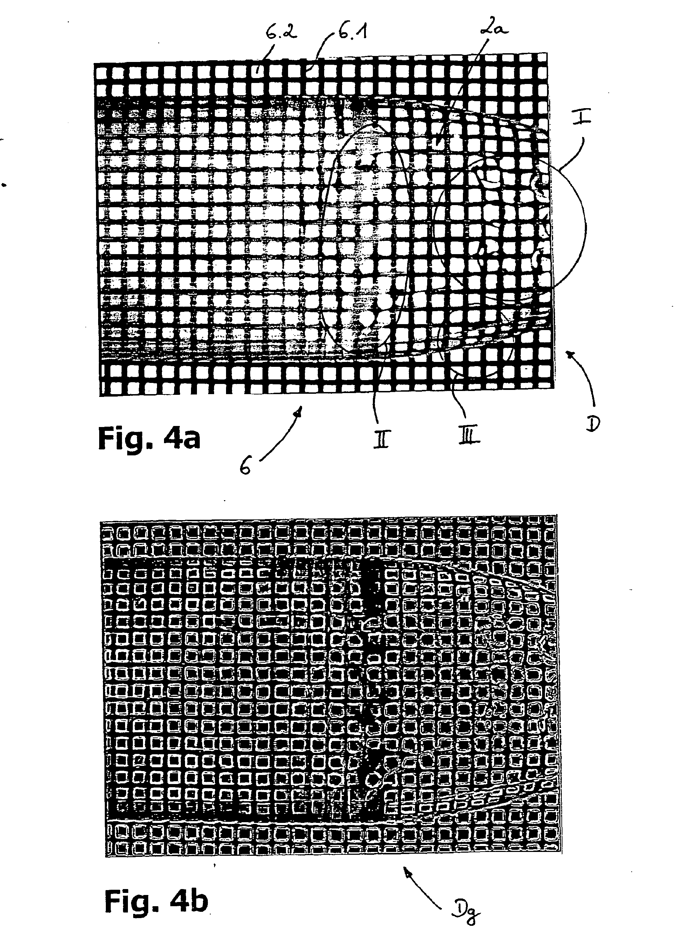

Die Fig. 4a zeigt das Bild D eines Teils einer PET-Mehrwegflasche 2a vor einer als Gitter 6 ausgebildeten Referenzgeometrie (vgl. Fig. 1, 2).

Wie aus der Fig. 4a erkenntlich, wirkt die Flasche 2a als eine Art Streuscheibe für das eingestrahlte Licht und führt so zu einer deutlich erkennbaren Verzerrung des ansonsten regelmäßigen Abbilds des Gitters 6, was insbesondere im Bereich I erkennbar ist. Darüber hinaus ergeben sich in anderen Bereichen des Bildes D, wie im Bereich II, Abschwächungen des ansonsten deutlichen Helligkeitskontrasts zwischen den Stäben 6.1 und den Durchbrüchen 6.2 des Gitters 6, von denen in der Fig. 4a jedoch - wie gesagt - nur ein Abbild dargestellt ist.

Abgesehen von ausgeprägten Bildkrümmungseffekten in den Randbereichen der Flasche 2a, beispielsweise im Bereich III, rühren die vorstehend angesprochenen Bildeffekte von einer Beschädigung des Flaschenmaterials durch Scuffing her; sie sollen mit Hilfe der erfindungsgemäßen Vorrichtung 1, 1' erkannt werden, so dass die Flasche 2a bei zu starker Beschädigung aus dem Verkehr gezogen werden kann.

Dazu wird das Bild D in der Bildverarbeitungseinrichtung 3.1a gemäß der Fig. 2 zunächst in ein Helligkeitsgradienten-Bild umgewandelt, wie es in der Fig. 4b dargestellt ist.

Die Fig. 4b zeigt die Bilddaten aus Fig. 4a nach deren Umwandlung in ein Helligkeitsgradienten-Bild, wobei ein an sich bekannter Standardalgorithmus, wie der Sobel-Algorithmus oder ein vergleichbarer Algorithmus, zur Anwendung kommen kann. Hierbei wird für jeden Bildpunkt ein Helligkeitskontrast zu den benachbarten Bildpunkten ermittelt, und der auf diese Weise ermittelte Helligkeitsgradient in jedem Punkt des Bildes an Stelle des ursprünglichen Bildpunkts dargestellt.

Die Verwendung des Helligkeitsgradienten an Stelle der ursprünglichen, digitalen Schwarz-Weiß-Bildpunkte ermöglicht eine verbesserte Differenzierung beim Erkennen von Scuffing. So lässt sich eine Kantenschärfe der Referenzgeometrie-Strukturen in den aufgenommenen Bilddaten ermitteln. Ab einer vorgegebenen Kantenunschärfe wird die betreffende Flasche aussortiert. Die Kantenunschärfe lässt sich durch digitale Schwarz-Weiß-Unterscheidungen nicht bestimmen; vielmehr wird hierzu der genannte Helligkeitsgradient benötigt. Durch Verwendung des Helligkeitsgradienten für die spätere Auswertung lässt sich auch vermeiden, dass bei einer dreidimensionalen, nicht rotationssymmetrischen Flaschengeometrie vor Aufnahme der Bilddaten eine präzise Ortspositionierung realisiert werden muss, was bei Verwendung des Gradienten nicht erforderlich ist. Des weiteren ist die erwähnte Schwarz-Weiß-Diskrimierung gegenüber Fremdlicht-Einflüssen anfälliger als die Gradientenmethode.

Die Bildverarbeitungs-Einrichtung 3.1a der erfindungsgemäßen Vorrichtung ist vorzugsweise dafür eingerichtet, die Helligkeitsintensität HI eines aufgenommenen Bildes auf einen einheitlichen (normierten) Wert zu setzen, um so einen ansonsten auftretenden, systematischen Fehler in der nachfolgend beschriebenen Auswertung zu vermeiden: Nach ihrem Durchgang durch das Objekt 2 und ggf. die Referenzgeometrie 6, 6a, 6b besitzt die Intensitätsverteilung des eingestrahlten Lichts im wesentlichen die Form einer (dreidimensionalen) Gauß'schen Glockenkurve mit einem ausgeprägten Intensitätsmaximum $HI_{max}$ im Zentrum und stark abfallender Intensität zu den Rändern des aufgenommenen Bildes hin. Dies würde im Zuge einer nachfolgenden Auswertung von Helligkeitsgradienten, wie sie erfindungsgemäß bevorzugt ist, zu einem systematischen Auftreten von Gradienten von den Rändern zur Bildmitte führen. Daher erfolgt in der Bildverarbeitungseinrichtung 3.1a vorzugsweise eine weitere Bildbearbeitung dahingehend, dass alle aufgenommenen Intensitätswerte HI mit HI > $HI_O$ ($HI_O$: vorzugebender Schwellenwert, beispielsweise $HI_O$ = 0 entsprechend keine Helligkeit, "schwarz") gemäß Beziehung HI' = $HI_{max}$ in neue Intensitätswerte HI' umgewandelt ("hochmultipliziert") werden. Auf diese Weise ergibt sich ein Bild mit einheitlicher, normierter Hell-Dunkel-Intensitätsverteilung. In dem erhaltenen Gradientenbild Dg gemäß der Fig. 4b lassen sich die vorstehend anhand in Fig. 4a identifizierten Fehlbereiche I-III anhand von Abweichungen des Gradientenbilds von seiner regelmäßigen, ungestörten Struktur leicht bestimmen. Dies geschieht erfindungsgemäß in den Bestimmungsmitteln 3.1b gemäß der Fig. 2 durch Bestimmung einer Standardabweichung des Helligkeitsgradienten von einem ungestörten Gradientenbild, wobei die Bestimmung vorzugsweise für mehrere Teilausschnitte des Gradientenbildes Dg vorgenommen wird, um auf diese Weise Rechenzeit zu sparen und den gesamten Vorgang zu beschleunigen sowie darüber hinaus solche Bereiche des Gradientenbildes Dg, in denen bereits aufgrund der bloßen Anwesenheit der Flasche Deformationen des Gradientenbildes Dg auftreten, wie im Bereich III, nicht mit zu berücksichtigen.

Die Standardabweichung des Helligkeitsgradienten lässt sich für zwei zueinander senkrechte Richtungen x, y eines Bildes mit $N_i$ Spalten und $N_j$ Zeilen erfindungsgemäß folgendermaßen bestimmen:

$$\text{Gradientenpunkt z':} \qquad z'_{i,j} = \left| x_{i+1} - x_{i-1} \right| + \left| y_{i+1} - y_{i-1} \right|.$$

$$\text{Mittelwert Gradient:} \qquad M' = \frac{\sum_{i=1}^{N_i} \sum_{j=1}^{N_j} z_{i,j}'}{N_i \cdot N_j}.$$

$$\text{Standardabweichung:} \qquad S' = \frac{\sum_{i=1}^{N_i} \sum_{j=1}^{N_j} (M' - z'_{i,j})}{N_i \cdot N_j}.$$

Die so ermittelte Kenngröße wird durch die Vergleichseinrichtung 3.1c mit einem direkt von einer Bedienperson oder aus den Speichermitteln 3.1d vorgegebenen Entscheidungs-Richtwert nach Art eines Schwellenwerts verglichen. Bei der Ein- bzw. Vorgabe des Schwellenwerts wird vorzugsweise wie folgt vorgegangen: Beim Start des Systems wird ein bekannter Standard-Schwellenwert eingegeben, nach Durchlauf einer bestimmten Anzahl von zu untersuchenden Objekten, beispielsweise 1000 Flaschen, wird der Schwellenwert aktualisiert. Dabei wird festgelegt, dass beispielsweise die schlechtesten 2% der Objekte auf der Grundlage der ermittelten Kenngröße ausgeschieden werden. Im Anschluss daran werden neue, unbeschädigte Objekte nach einem FIFO-Prinzip (first-in/first-out) zur Bestimmung einer aktuellen Kenngröße bzw. der daraus abgeleiteten, aktualisierten Schwelle herangezogen, wobei die Aktualisierung derart erfolgt, dass der neu ermittelte Schwellwert gerade noch zur Ausscheidung des festgelegten, prozentuellen Anteils von Objekten führt. Wird demnach der genannte Schwellenwert - beispielsweise eine maximal tolerierbare Standardabweichung - überschritten (Objekt "schlecht"), so kann beispielsweise über die Ein-/Ausgabemittel 3.1c eine Ausgabe an die Bedienperson erfolgen, dass das entsprechende Objekt 2 auszusortieren ist. Möglich ist jedoch auch eine signaltechnische Benachrichtigung einer geeigneten Handhabungseinrichtung (nicht gezeigt), durch die das betreibende Objekt 2 automatisch von dem Fördermittel 5 entfernt und aus dem Mehrweg-Kreislauf ausgeleitet, beispielsweise über einen an sich bekannten Ausleitstern oder durch Verwendung eines Pusher-Systems, das "schlechte" Objekte auf ein Ausleitband (nicht gezeigt) stößt. Alternativ kann auch das Fördermittel 5 selbst zum Ausscheiden des Objekts 2 beeinflusst werden.

Vorteilhafter Weise können in den Speichermitteln 3.1d vorbestimmte Kenngrößen einer ungestörten Referenzgeometrie bzw. einer durch ein unbeschädigtes Objekt 2 beeinflussten Referenzgeometrie oder weitere Referenz-Kenngrößen abgelegt sein, die somit als Referenzwerte für die Vergleichseinrichtung 3.1c beim Bestimmen von Gebrauchsspuren eines bestimmten Objekts 2 dienen.

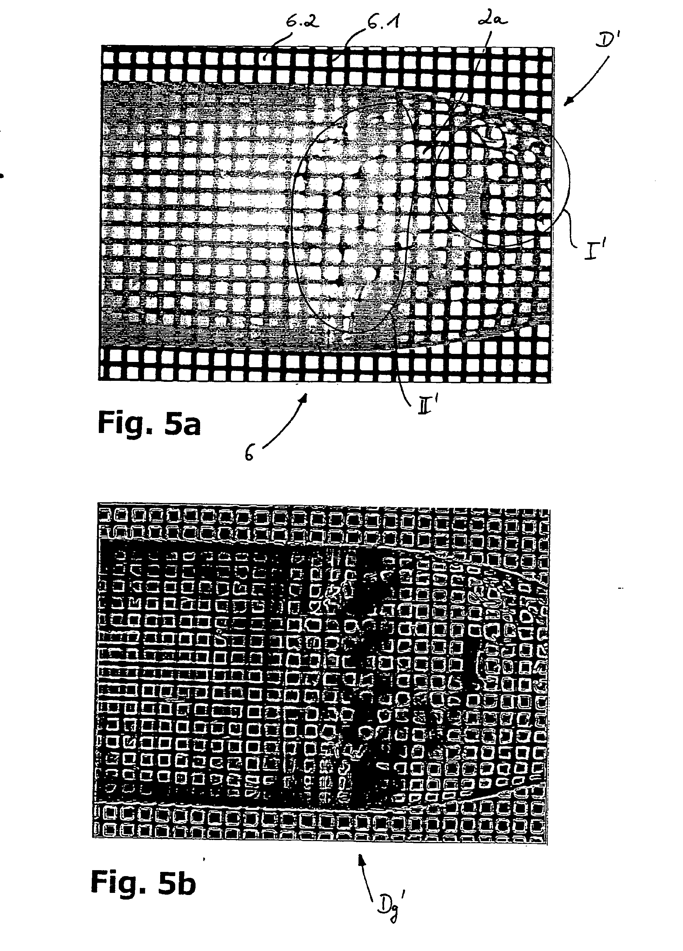

Die Fig. 5a zeigt Bilddaten D' derselben Flasche 2a wie in Fig. 4a, wobei jedoch gemäß der Ausgestaltung in Fig. 2 eine zweite Beobachtungseinrichtung mit zugehöriger Lichtquelle und Referenzgeometrie zum Aufnehmen der Daten verwendet wurde. Auch in dieser Ansicht zeigen sich deutlich ausgeprägte Scuffing-Spuren, insbesondere in den Bereichen I', II', die sich gemeinsam mit den Informationen aus den Bilddaten gemäß der Fig. 4a zur Gesamtbeurteilung des Gebrauchszustands der Flasche 2a ergänzen.

Die Fig. 5b zeigt das zu den Bilddaten D' der Fig. 5a gehörige Gradientenbild Dg'. Die Bereiche I', II' treten auch hier als Störungen des Gradientenbilds Dg' eindeutig in Erscheinung, so dass eine Kenngröße ermittelbar und gemäß den oben gemachten Aussagen zum Untersuchen des Objekts auf Gebrauchsspuren sowie deren Bewertung nutzbar ist.

Im praktischen Einsatz der erfindungsgemäßen Vorrichtung 1, 1' ergibt die anhand der Fig. 4b und 5b ermittelte Standardabweichung der Gradientenbilder Dg, Dg' nach Vergleich mit einem Entscheidungs-Richtwert, dass die betreffende Flasche 2a zu starke Scuffing-Spuren aufweist und daher aus dem Verkehr zu ziehen ist.

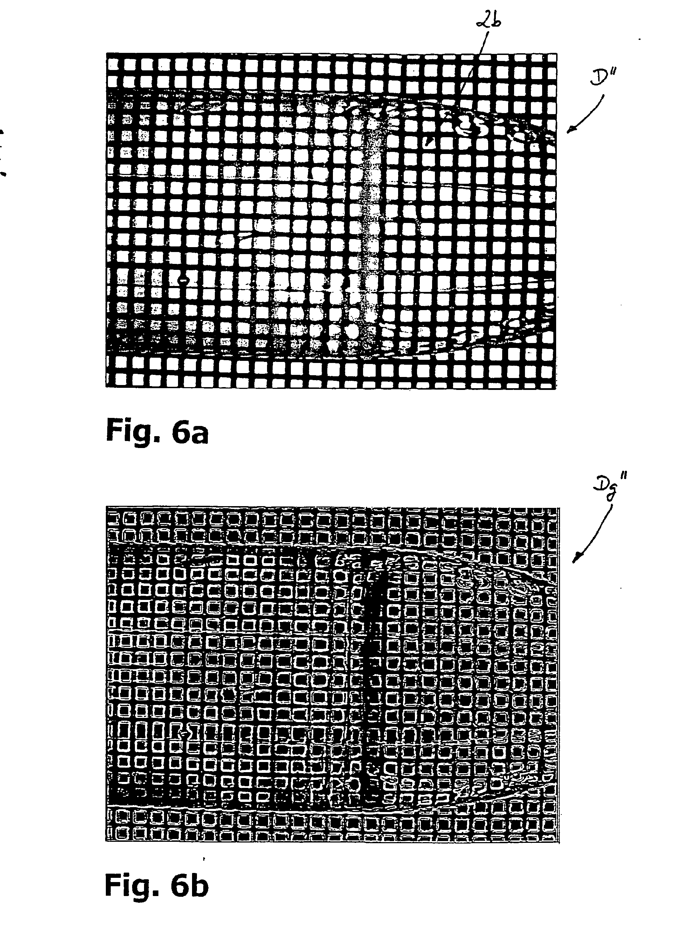

Anders dagegen die in den Fig. 6a und 6b anhand von Originalbilddaten D'' bzw. dem zugehörigen Gradientenbild Dg'' gezeigte Flasche 2b. Hier sind im Gradientenbild im Vergleich mit den Fig. 4b und 5b nur schwache Unregelmäßigkeiten zu erkennen, so dass die Flasche 2b nach Ermittlung der Standardabweichung des Gradientenbilds Dg'' und dem geschilderten Vergleich mit einem Richtwert positiv bewertet wird und so weiterhin im Mehrweg-Kreislauf verbleibt.

**Bezugszeichenliste**

| | |
|---|---|
| 1, 1' | Vorrichtung |
| 2 | Objekt |
| 2a, 2b | Flasche |
| 3, 3.1, 3.2 | Beobachtungseinrichtung |
| 3.1a | Bildverarbeitungseinrichtung |
| 3.1b | Bestimmungseinrichtung |
| 3.1c | Vergleichseinrichtung |
| 3.1d | Speichermittel |
| 3.1e | Eingabe-/Ausgabemittel |
| 4, 4', 4.1, 4.2 | Lichtquelle |
| 5 | Fördermittel |
| 6, 6a, 6b | Referenzgeometrie, Gitter |
| 6.1 | Gitterstab |
| 6.2 | Durchbruch |
| 6.3 | Hintergrund |
| A | Ausleitung |

| | |
|---|---|
| B, B1, B2 | Beobachtungsrichtung |
| D, D', D'' | Bilddaten |
| Dg, Dg', Dg'' | Gradientenbild |
| G | Punkt |
| F | Fördertakt |
| I | Eingabedaten |
| IN1, IN2 | Informationen |
| O | Ausgabedaten |
| P | Förderrichtung |
| PC | bauliche Einheit, PC |
| SNI | Zwischenglied |
| SPS | Steuereinrichtung |
| SYS | Systemsteuerung |
| T | Trigger-Signal |
| V | Verbindung $\alpha$ Winkel |
| I, II, III | Bereich |
| I', I'' | Bereich |

**Patentansprüche**

1. Verfahren zum Untersuchen von im Wesentlichen lichtdurchlässigen Objekten, insbesondere Getränkeflaschen aus Glas oder Kunststoff, auf Gebrauchsspuren, wie Kratzer oder dergleichen, wobei die Objekte jeweils einer Lichteinstrahlung ausgesetzt und mittels wenigstens einer Beobachtungseinrichtung beobachtet werden und wobei wenigstens ein Teil der Lichtstrahlung, der die Objekte ausgesetzt werden, vor deren Eintreffen an der Beobachtungseinrichtung mit einer Referenzgeometrie mit vorbekanntem Helligkeitsprofil in Wechselwirkung gebracht wird und durch die Beobachtungseinrichtung wenigstens ein Bild eines zu untersuchenden Bereiches des Objektes aufgenommen und analysiert wird, **dadurch gekennzeichnet, dass** das aufgenommene Bild vor der Analyse in ein Helligkeitsgradienten-Bild umgewandelt und eine Kenngröße des Helligkeitsgradientenbilds ermittelt wird, wobei als Kenngröße eine Standardabweichung des Helligkeitsgradientenbilds bestimmt wird.

2. Verfahren nach Anspruche 1 **dadurch gekennzeichnet, dass** eine Mehrzahl von Ausschnitten des aufgenommenen Bildes analysiert und die Analyseergebnisse kombiniert werden.

3. Verfahren nach einem der Ansprüche 1 oder 2, **dadurch gekennzeichnet, dass** die ermittelten Kenngrößen einzeln oder kombiniert mit einem vorgegebenen Entscheidungs-Richtwert verglichen werden.

4. Verfahren nach einem der Ansprüche 1 bis 3, **dadurch gekennzeichnet, dass** die Strahlung zunächst mit der Referenzgeometrie und anschließend mit dem zu untersuchenden Objekt wechselwirkt.

5. Verfahren nach einem der Ansprüche 1 bis 3, **dadurch gekennzeichnet, dass** die Strahlung zunächst mit dem zu untersuchenden Objekt und anschließend mit der Referenzgeometrie wechselwirkt.

6. Verfahren nach einem der Ansprüche 1 bis 5, **dadurch gekennzeichnet, dass** die Objekte einer Auflicht-Einstrahlung ausgesetzt werden.

7. Verfahren nach einem der Ansprüche 1 bis 5, **dadurch gekennzeichnet, dass** die Objekte einer Durchlicht-Einstrahlung ausgesetzt werden.

8. Verfahren nach einem der vorangehenden Ansprüche, **dadurch gekennzeichnet, dass** die Referenzgeometrie durchstrahlt wird.

9. Verfahren nach einem der Ansprüche 1 bis 7, **dadurch gekennzeichnet, dass** die Strahlung an der Referenzgeometrie rückgestreut wird.

10. Verfahren nach einem der Ansprüche 1 bis 9, **dadurch gekennzeichnet, dass** die Objekte jeweils mittels zwei Beobachtungseinrichtungen beobachtet werden, deren Beobachtungsrichtungen miteinander einen im Wesentlichen rechten Winkel einschließen.

11. Verfahren nach einem der Ansprüche 1 bis 10, **dadurch gekennzeichnet, dass** die Lichteinstrahlung blitzartig erfolgt.

12. Verfahren nach einem der Ansprüche 1 bis 10, **dadurch gekennzeichnet, dass** die Lichteinstrahlung kontinuierlich erfolgt.

13. Verfahren nach einem der Ansprüche 1 bis 12, **dadurch gekennzeichnet, dass** als Referenzgeometrie eine im Wesentlichen ebene Gitterstruktur verwendet wird.

14. Verfahren nach einem der Ansprüche 1 bis 13, **dadurch gekennzeichnet, dass** als Referenzgeometrie eine im Wesentlichen quadratische Gitterstruktur verwendet wird.

15. Vorrichtung zum Untersuchen von im Wesentlichen lichtdurchlässigen Objekten, insbesondere Getränkeflaschen aus Glas oder Kunststoff, auf Gebrauchsspuren, wie Kratzer oder dergleichen, mit mindestens einer Lichtquelle (4, 4', 4.1, 4.2) zum Einstrahlen von Licht auf ein zu prüfendes Objekt, mindestens einer Beobachtungseinrichtung (3, 3.1, 3.2) zum Beobachten des zu prüfenden Objekts, die zumindest zum Aufnehmen und Auswerten eines Bildes (D, D', D") des Objekts ausgebildet ist, und einer in einem Lichtweg von der Lichtquelle zur Beobachtungseinrichtung angeordneten Referenzgeometrie mit vorbekanntem Helligkeitsprofil, deren Abbild in dem aufgenommenen Bild zum Bestimmen der Gebrauchsspuren auswertbar ist, **dadurch gekennzeichnet, dass** die Beobachtungseinrichtung eine Bildverarbeitungseinrichtung (3.1 a) zum Bestimmen mindestens eines Helligkeitsgradienten-Bildes (Dg, Dg', Dg") aus dem aufgenommenen Bild vor der Analyse und ein Bestimmungseinrichtung (3.1b) zum Bestimmen einer Kenngröße des Helligkeitsgradientenbildes aufweist, wobei die Kenngröße eine Standardabweichung des Helligkeitsgradienten-Bildes ist.

16. Vorrichtung nach Anspruch 15, **dadurch gekennzeichnet, dass** die Referenzgeometrie (6, 6a, 6b) als Gitterstruktur aus einem farblich gegenüber einem Hintergrund (6.3) kontrastierten Material gebildet (6.1) ist.

17. Vorrichtung nach Anspruch 15 oder 16, **dadurch gekennzeichnet, dass** die Referenzgeometrie (6, 6a, 6b,) als Quadratgitter-Struktur (6.1, 6.2) ausgebildet ist.

18. Vorrichtung nach Anspruch 15, **dadurch gekennzeichnet, dass** die Referenzgeometrie (6, 6a, 6b) als Schachbrettmuster ausgebildet ist.

19. Vorrichtung nach Anspruch 15, **gekennzeichnet durch** eine Vergleichseinrichtung (3.1c) zum Vergleichen der Kenngröße mit wenigstens einem vorgegebenen Entscheidungs-Richtwert.

20. Vorrichtung nach einem der Ansprüche 15 bis 19, **gekennzeichnet durch** wenigstens zwei unter einem endlichen Winkel ($\alpha$) zueinander angeordnete Beobachtungseinrichtungen (3.1, 3.2).

21. Vorrichtung nach Anspruch 20, **dadurch gekennzeichnet, dass** die Beobachtungsrichtungen (B1, B2) der Beobachtungseinrichtungen (3.1,3.2) untereinander einen im Wesentlichen rechten Winkel einschließen.

22. Vorrichtung nach Anspruch 20 oder 21, **dadurch gekennzeichnet, dass** der Winkel($\alpha$) zwischen den Beobachtungsrichtungen (3.1, 3.2) veränderbar ist.

23. Vorrichtung nach einem der Ansprüche 15 bis 22, **dadurch gekennzeichnet, dass** die Lichtquelle (4, 4.1, 4.2) von der Beobachtungseinrichtung (3, 3.1, 3.2) aus gesehen im Wesentlichen hinter der Anordnung aus Objekt (2) und der Referenzgeometrie (6, 6a, 6b) angeordnet ist.

24. Vorrichtung nach einem der Ansprüche 15 bis 22, **dadurch gekennzeichnet, dass** die Lichtquelle(4') unter einem Winkel zwischen 0° und 180°, vorzugsweise zwischen 45° und 135°, bezogen auf die Beobachtungsrichtung (B) der Beobachtungseinrichtung (3) angeordnet ist.

25. Vorrichtung nach einem der Ansprüche 15 bis 24, **gekennzeichnet durch** ein Fördermittel (5), **durch** das die untersuchenden Objekte (2) an der Beobachtungseinrichtung (3, 3.1, 3.2) vorbei bewegbar sind.

26. Vorrichtung nach einem der Ansprüche 15 bis 25, **dadurch gekennzeichnet, dass** mindestens eine Lichtquelle (4, 4', 4.1, 4.2) als Blitzlicht ausgebildet ist.

**27.** Vorrichtung nach einem der Ansprüche 15 bis 25, **dadurch gekennzeichnet, dass** mindestens eine Lichtquelle (4 ,4', 4.1, 4.2) als kontinuierlich strahlende Lichtquelle (4, 4', 4.1, 4.2) ausgebildet ist.

**28.** Vorrichtung nach einem der Ansprüche 15 bis 27, **dadurch gekennzeichnet, dass** die Lichtquelle (4, 4', 4.1, 4.2) zum Ausstrahlen von sichtbarem Licht ausgebildet ist.

**29.** Vorrichtung nach einem der Ansprüche 15 bis 27, **dadurch gekennzeichnet, dass** die Lichtquelle (4, 4', 4.1, 4.2) zum Ausstrahlen von Licht im infraroten Spektralbereich ausgebildet ist.

**30.** Vorrichtung nach einem der Ansprüche 15 bis 29, **dadurch gekennzeichnet, dass** die Lichtquelle (4, 4', 4.1, 4.2) als Anordnung von Leuchtdioden ausgebildet ist.

**31.** Vorrichtung nach Anspruch 30, **dadurch gekennzeichnet, dass** eine Anzahl von Leuchtdioden matrixförmig angeordnet sind.

**32.** Vorrichtung nach einem der Ansprüche 15 bis 31, **gekennzeichnet durch** zwei Beobachtungsanordnungen mit je einer Beobachtungseinrichtung (3.1, 3,2) und je einer Lichtquelle (4.1, 4.2), wobei die Beobachtungsrichtungen (B1, B2) der Beobachtungsanordnungen im Wesentlichen orthogonal zueinander ausgerichtet sind.

**Claims**

**1.** A method to examine substantially transparent objects, in particular drinks bottles made from glass or plastic, for signs of prior use, such as scuffing or similar, wherein each of the objects is exposed to a light beam and observed by means of at least one monitoring device, and wherein at least part of the light beam, which the objects are exposed to, is made to interact with a reference geometry with a known brightness profile before arriving at the monitoring device, and wherein at least one image of an area of the object under examination is recorded and analysed by the monitoring device, **characterised by** the fact that the recorded image is converted into a brightness gradient image before the analysis and that a characteristic of the brightness gradient image is determined, with the characteristic being defined as standard deviation of the brightness gradient image.

**2.** A method according to claim 1, **characterised by** the fact that a plurality of sections of the recorded image are analysed and the analysis results are combined.

**3.** A method according to one of the claims 1 or 2, **characterised by** the fact that the determined characteristics values, individually or in combination, are compared to a specified standard value serving as decision criterion.

**4.** A method according to one of the claims 1 to 3, **characterised by** the fact that the beam interacts first with the reference geometry and subsequently with the object under examination.

**5.** A method according to one of the claims 1 to 3, **characterised by** the fact that the beam first interacts with the object under examination and subsequently with the reference geometry.

**6.** A method according to one of the claims 1 to 5, **characterised by** the fact that the objects are exposed to an incident light beam.

**7.** A method according to one of the claims 1 to 5, **characterised by** the fact that the objects are exposed to a transmitted light beam.

**8.** A method according to one of the previous claims, **characterised by** the fact that a beam is passed through the reference geometry.

**9.** A method according to one of the claims 1 to 7, **characterised by** the fact that the beam is backscattered from the reference geometry.

**10.** A method according to one of the claims 1 to 9, **characterised by** the fact that each of the objects is observed by means of two monitoring devices, whose directions of observation enclose a substantially right angle between them.

11. A method according to one of the claims 1 to 10, **characterised by** the fact that the light beam works in flash operation.

12. A method according to one of the claims 1 to 10, **characterised by** the fact that the light beam operates continuously.

13. A method according to one of the claims 1 to 12, **characterised by** the fact that a substantially flat grid structure is used as reference geometry.

14. A method according to one of the claims 1 to 13, **characterised by** the fact that a substantially square grid structure is used as grid reference.

15. An apparatus to examine substantially transparent objects, in particular drinks bottles made from glass or plastic, for signs of prior use, such as scuffing or similar, having at least one light source (4, 4', 4.1, 4.2) to beam light onto an object under examination, at least one monitoring device (3, 3.1, 3.2) to observe the object under examination, designed to at least record and analyse one image (D, D', D") of the object, and a reference geometry with a known brightness profile disposed in a light path from the light source to the monitoring device, where the depiction of said reference geometry in the recorded image can be analysed to determine the signs of prior use, **characterised by** the fact that the monitoring device incorporates an image processing device (3.1 a) for the determination of at least one brightness gradient image (Dg, Dg', Dg") from the recorded image before the analysis and
a determination device (3.1b) for the determination of a characteristic of the brightness gradient image, with the characteristic being a standard deviation of the brightness gradient image.

16. An apparatus according to claim 15, **characterised by** the fact that the reference geometry (6, 6a, 6b) is configured as a grid structure made from a material (6.1) that provides a colour contrast against a background (6.3).

17. An apparatus according to claim 15 or 16, **characterised by** the fact that the reference geometry (6, 6a, 6b) is configured as a square grid structure (6.1, 6.2).

18. An apparatus according to claim 15, **characterised by** the fact that the reference geometry (6, 6a, 6b) is configured as a chequerboard pattern.

19. An apparatus according to claim 15, **characterised by** a comparison device (3.1 c) to compare the characteristic with at least one specified standard value serving as decision criterion.

20. An apparatus according to one of the claims 15 to 19, **characterised by** at least two monitoring devices (3.1, 3.2) disposed at a finite angle ($\alpha$) to each other.

21. An apparatus according to claim 20, **characterised by** the fact that the directions of observation (B1, B2) of the monitoring devices (3.1, 3.2) enclose a substantially right angle between them.

22. An apparatus according to claim 20 or 21, **characterised by** the fact that the angle ($\alpha$) between the directions of observation (3.1, 3.2) is changeable.

23. An apparatus according to one of the claims 15 to 22, **characterised by** the fact that the light source (4, 4.1, 4.2) is substantially disposed behind the arrangement comprising the object (2) and the reference geometry (6, 6a, 6b), viewed from the monitoring device (3, 3.1, 3.2).

24. An apparatus according to one of the claims 15 to 22, **characterised by** the fact that the light source (4') is disposed at an angle between 0° and 180°, preferably between 45° and 135°, with respect to the direction of observation (B) of the monitoring device (3).

25. An apparatus according to one of the claims 15 to 24, **characterised by** a means of conveyance (5), whereby the objects under examination (2) can be moved past the monitoring device (3, 3.1, 3.2).

26. An apparatus according to one of the claims 15 to 25, **characterised by** the fact that at least one light source (4, 4', 4.1, 4.2) is configured as a flashing light.

27. An apparatus according to one of the claims 15 to 25, **characterised by** the fact that at least one light source (4, 4', 4.1, 4.2) is configured as a continuously radiating light source (4, 4', 4.1, 4.2).

**28.** An apparatus according to one of the claims 15 to 27, **characterised by** the fact that the light source (4, 4', 4.1, 4.2) is configured to emit visible light.

**29.** An apparatus according to one of the claims 15 to 27, **characterised by** the fact that the light source (4, 4', 4.1, 4.2) is configured to emit light in the infrared spectral range.

**30.** An apparatus according to one of the claims 15 to 29, **characterised by** the fact that the light source (4, 4', 4.1, 4.2) is configured as an arrangement of light-emitting diodes.

**31.** An apparatus according to claim 30, **characterised by** the fact that a number of light-emitting diodes are disposed in a matrix arrangement.

**32.** An apparatus according to one of the claims 15 to 31, **characterised by** two monitoring arrangements each comprising one monitoring device (3.1, 3.2) and one light source (4.1, 4.2), wherein the directions of observation (B1, B2) of the monitoring arrangements are substantially disposed at a right angle to each other.

**Revendications**

**1.** Procédé d'examen de traces d'usure, telles que des éraflures ou similaires, sur des objets sensiblement translucides, en particulier des bouteilles en verre ou en plastique destinées à contenir des boissons, dans lequel les objets sont exposés à un rayonnement lumineux et observés à l'aide d'au moins une installation d'observation, dans lequel au moins une partie du rayonnement auquel les objets sont exposés, avant d'arriver à l'installation d'observation, est amenée à interagir avec une géométrie de référence possédant un profil de luminosité déjà connu et dans lequel l'installation d'observation enregistre et analyse moins une image d'une zone examinée de l'objet, **caractérisé en ce que**, avant l'analyse, l'image enregistrée est transformée en une image à gradient de luminosité et une grandeur caractéristique de cette image à gradient de luminosité est déterminée, la grandeur caractéristique étant un écart type de l'image à gradient de luminosité.

**2.** Procédé selon la revendication 1, **caractérisé en ce qu'**une majorité de secteurs de l'image enregistrée est analysée et que les résultats d'analyse sont combinés.

**3.** Procédé selon l'une des revendications 1 et 2, **caractérisé en ce que** les grandeurs caractéristiques déterminées, individuellement ou combinées, sont comparées avec une valeur indicative de décision prédéterminée.

**4.** Procédé selon l'une des revendications 1 à 3, **caractérisé en ce que** le rayonnement interagit d'abord avec la géométrie de référence et ensuite avec l'objet à examiner.

**5.** Procédé selon l'une des revendications 1 à 3, **caractérisé en ce que** le rayonnement interagit d'abord avec l'objet à examiner et ensuite avec la géométrie de référence.

**6.** Procédé selon l'une des revendications 1 à 5, **caractérisé en ce que** les objets sont exposés à un rayonnement de lumière incidente.

**7.** Procédé selon l'une des revendications 1 à 5, **caractérisé en ce que** les objets sont exposés un rayonnement de lumière transmise.

**8.** Procédé selon l'une des revendications ci-dessus, **caractérisé en ce que** la lumière traverse la géométrie de référence.

**9.** Procédé selon l'une des revendications 1 à 7, **caractérisé en ce que** le rayonnement est renvoyée par diffusion sur la géométrie de référence.

**10.** Procédé selon l'une des revendications 1 à 9, **caractérisé en ce que** les objets sont observés par deux installations d'observation dont les directions d'observation forment sensiblement un angle droit.

**11.** Procédé selon l'une des revendications 1 à 10, **caractérisé en ce que** le rayonnement lumineux est produit sous la forme d'un éclair.

**12.** Procédé selon l'une des revendications 1 à 10, **caractérisé en ce que** le rayonnement lumineux est produit de façon continue.

**13.** Procédé selon l'une des revendications 1 à 12, **caractérisé en ce qu'**une structure en treillis sensiblement plane est utilisée comme géométrie de référence.

**14.** Procédé selon l'une des revendications 1 à 13, **caractérisé en ce qu'**une structure en treillis sensiblement carré est utilisée comme géométrie de référence.

**15.** Dispositif d'examen de traces d'usure, telles que des éraflures ou similaires, sur des objets sensiblement translucides, en particuliers des bouteilles en verre ou en plastique destinées à contenir des boissons, avec au moins une source de lumière (4, 4', 4.1, 4.2) destinée à envoyer de la lumière sur l'objet examiné, avec au moins une installation d'observation (3, 3.1, 3.2) destinée à observer l'objet à examiner, conçue pour enregistrer et analyser au moins une image (D, D', D") de l'objet, et avec une géométrie de référence interposée dans le trajet de la lumière entre la source de lumière et l'installation d'observation, possédant un profil de luminosité déjà connu, dont la représentation dans l'image enregistrée peut être évaluée pour déterminer les traces d'usures, **caractérisé en ce que** l'installation d'observation comporte un dispositif de traitement d'image (3.1 a) destiné à déterminer avant l'analyse au moins une image à gradient de luminosité (Dg, Dg', Dg") à partir de l'image enregistrée et un dispositif de détermination (3.1 b) destiné à déterminer une grandeur caractéristique de l'image à gradient de luminosité, la grandeur caractéristique étant un écart type de l'image à gradient de luminosité.

**16.** Dispositif selon la revendication 15, **caractérisé en ce que** la géométrie de référence (6, 6a, 6b) est formée (6.1) d'une structure en treillis faite dans un matériau faisant contraste sur l'arrière-plan (6.3).

**17.** Dispositif selon la revendication 15 ou 16, **caractérisé en ce que** la géométrie de référence (6, 6a, 6b) prend la forme (6.1, 6.2) d'une structure en treillis carré.

**18.** Dispositif selon la revendication 15, **caractérisé en ce que** la géométrie de référence (6, 6a, 6b) prend la forme d'un motif à damiers.

**19.** Dispositif selon la revendication 15, **caractérisé par** une installation de comparaison (3.1 c) destinée à comparer la grandeur caractéristique avec au moins une valeur indicative de décision prédéterminée.

**20.** Dispositif selon l'une des revendications 15 à 19, **caractérisé par** au moins deux installations d'observation (3.1, 3.2) formant ensemble un angle fini ($\alpha$).

**21.** Dispositif selon la revendication 20, **caractérisé en ce que** les directions d'observation (B1, B2) des installations d'observation (3.1, 3.2) forment un angle sensiblement droit.

**22.** Dispositif selon la revendication 20 ou 21, **caractérisé en ce que** l'angle ($\alpha$) entre les directions d'observation (3.1, 3.2) peut varier.

**23.** Dispositif selon l'une des revendications 15 à 22, **caractérisé en ce que** la source de lumière (4, 4.1, 4.2), observée à partir de l'installation d'observation (3, 3.1, 3.2), est disposée sensiblement derrière l'agencement composé de l'objet (2) et de la géométrie de référence.

**24.** Dispositif selon l'une des revendications 15 à 22, **caractérisé en ce que** la source de lumière (4') est disposée selon un angle compris entre 0° et 180°, de préférence compris entre 45° et 135°, par rapport à la direction d'observation (B) de l'installation d'observation (3).

**25.** Dispositif selon l'une des revendications 15 à 24, **caractérisé par** un moyen de transport (5), grâce auquel les objets examinés (2) peuvent être passés devant l'installation d'observation (3, 3.1, 3.2).

**26.** Dispositif selon l'une des revendications 15 à 25, **caractérisé en ce que** au moins une source de lumière (4, 4', 4.1, 4.2) est conçue comme un flash.

**27.** Dispositif selon l'une des revendications 15 à 25, **caractérisé en ce que** au moins une source de lumière (4, 4', 4.1, 4.2) est conçue comme une source de lumière au rayonnement continu (4, 4', 4.1, 4.2).

**28.** Dispositif selon l'une des revendications 15 à 27, **caractérisé en ce que** au moins une source de lumière (4, 4', 4.1, 4.2) est conçue pour diffuser une lumière visible.

**29.** Dispositif selon l'une des revendications 15 à 27, **caractérisé en ce que** au moins une source de lumière (4, 4', 4.1, 4.2) est conçue pour diffuser une lumière dans le domaine infrarouge du spectre.

**30.** Dispositif selon l'une des revendications 15 à 29, **caractérisé en ce que** au moins une source de lumière (4, 4', 4.1, 4.2) est conçue comme un agencement de diodes électroluminescentes.

**31.** Dispositif selon la revendication 30, **caractérisé en ce qu'**un certain nombre de diodes électroluminescentes est disposé en forme de matrice.

**32.** Dispositif selon l'une des revendications 15 à 31, **caractérisé par** deux agencements d'observation avec chacun une installation d'observation (3, 3.1, 3.2) et chacun une source de lumière (4.1, 4.2), les directions d'observation (B1, B2) des agencements d'observation étant orie ntées de manière essentiellement orthogonale entre elles.

**Fig. 1**

**Fig. 2**

**Fig. 3**

**Fig. 4a**

**Fig. 4b**

Fig. 5a

Fig. 5b

2b

D''

**Fig. 6a**

Dg''

**Fig. 6b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6239870 B1